# EUROPEAN PATENT SPECIFICATION

(11) **EP 1 956 540 B1**
(45) Date of publication and mention of the grant of the patent: **07.09.2011**
(21) Application number: 08150954.9
(22) Date of filing: 01.02.2008
(51) Int. Cl.: F24F 11/00, G07C 3/00

(54) **Building management system and method**
Verwaltungssystem für Gebäude und Verfahren
Système et procédé de gestion de construction

(30) Priority: 08.02.2007 KR 20070013375
(43) Date of publication of application: 13.08.2008
(73) Proprietor: LG Electronics Inc., Seoul, 150-721 (KR)
(72) Inventor: Jung, Hai-Young, 327-23, Seoul (KR); Youn, Sang-Chul, 327-23, Seoul (KR); Jeon, Duck-Gu, 327-23, Seoul (KR)
(74) Representative: Vossius & Partner

(56) References cited:
- WO-A-00/48376
- US-A1- 2002 016 639
- US-A1- 2006 065 750
- WANG ET AL: "A middleware for web service-enabled integration and interoperation of intelligent building systems" AUTOMATION IN CONSTRUCTION, ELSEVIER SCIENCE PUBLISHERS, AMSTERDAM, NL, vol. 16, no. 1, 1 January 2007 (2007-01-01), pages 112-121, XP005706007 ISSN: 0926-5805

## Description

The present invention relates to a building management system and method and, more particularly, to a building management system and method capable of managing detailed information, that an existing building management system fails to do, through a remote integrated management server, thereby improving user convenience.

The document WO 00/48376 discloses a building management system of the background art.

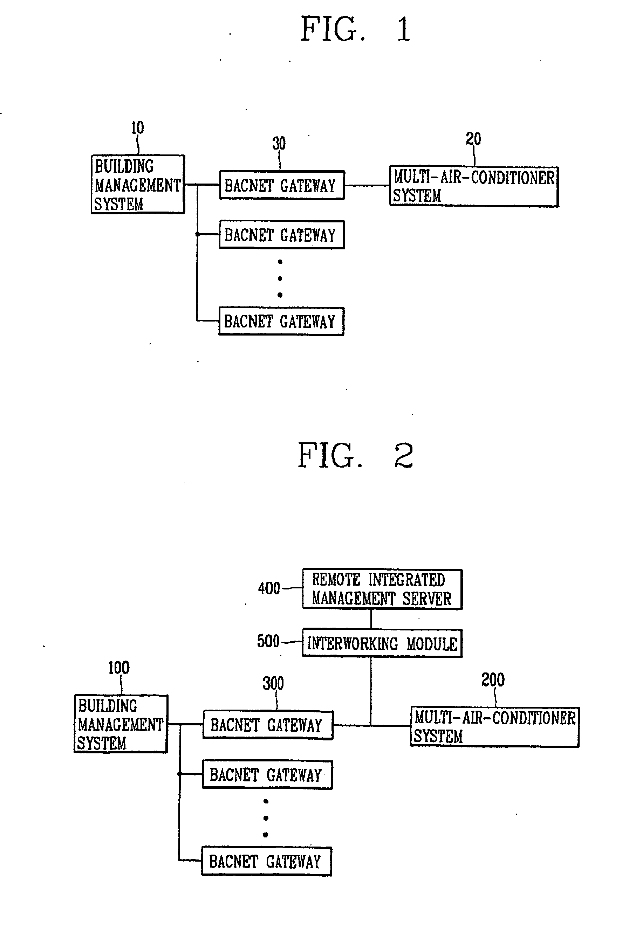

FIG. 1 is a schematic view showing the structure of a building management system according to the related art.

As shown in FIG. 1, the related art building management system includes a central control system 10 connected to a network and centrally controlling subsystem such as power management or illumination equipment accommodated in a building, a multi-air-conditioner system 20 including an outdoor unit and one or more indoor units, and BACnet (Building Automation and Control network) gateways 30 serving as a connection passage between the central control system and the multi-air-conditioner system to allow the central control system 10 to centrally control the multi-air-conditioner system 20.

The basic function of the BACnet gateway 30 is to connect the multi-air-conditioner system 20 and the central control system 10. However, these days, the trend is that, in addition to functioning as a simple gateway, the BACnet gateway 30 performs various supplementary functions such as a self-diagnosing function, and various other functions that may help a person install the multi-air-conditioner system 20 are being developed.

With such a construction, the related art building management system performs management such that information related to a state of the multi-air-conditioner system 20 is transmitted to the central control system 10 via the BACnet gateway 30, and the central control system 10 controls the multi-air-conditioner system 20 via the BACnet gateway 30 based on the received information.

However, in the related art building management system, the multi-air-conditioner system 20 is connected with a larger-sized central control system 10 so as to be controlled. In this case, there is a limitation for the central control system 10 to control the multi-air-conditioner system 20 due to the capacity of the central control system 10 or other factors, failing to manage detailed information related to the multi-air-canditioner system 20, degrading the user convenience.

Therefore, in order to address the above matters, the various features described herein have been conceived. One aspect of the exemplary embodiments is to provide a building management system and method capable of managing detailed information, that an existing building management system fails to do, through a remote integrated management server, thereby improving user convenience.

This specification provides a building management system that may include: a central control system connected with a network and centrally controlling at least one sub-system accommodated in a building; a multi-air-conditioner system including an outdoor unit and one or more indoor units connected with the outdoor unit; a BACnet gateway serving as a connection passage of the central control system and the multi-air-conditioner system to allow the central control system to centrally control the multi-air-conditioner system; and a remote integrated management server that controls the multi-air-conditioner system by interworking with the BACnet gateway.

The building management system may further include: an interworking module positioned between the BACnet gateway and the remote integrated management server and allowing the BACnet gateway and the remote integrated management server to interwork with each other.

This specification also provides a building management system that may include: an interworking module which is positioned between a BACnet gateway and a remote integrated management server serving as a connection passage of the central control system and the multi-air-conditioner system, and allows the BACnet gateway and the remote integrated management server to interwork with each other, wherein the interworking module periodically receives first information data from the multi-air-conditioner system, stores the received data, is connected with the remote integrated management server, and transmits the first information data.

The first information data may include information data related to the indoor units and ventilation.

The interworking module may include: a data updating unit that periodically updates data; a data transmission unit that transmits the updated data to the remote integrated management server; and a protocol unit that connects the data updating unit and the data transmission unit.

The protocol unit may use an XML (extensible Markup Language) to facilitate a variable extension.

This specification also provides a building management method that may include: periodically receiving and updating first information data of the multi-air-conditioner system; generating the received first information data as a tag available for a user definition and storing the tag; and transmitting the generated tag to a remote integrated management system.

The first information data may include information data related to the indoor units and ventilation.

The tag may be generated by using an XML protocol with good extensibility.

The foregoing and other objects, features, aspects and advantages of the present invention will become more apparent from the following detailed description of the present invention when taken in conjunction with the accompanying drawings.
FIG. 1 is a view showing the construction of a building management system according to the related art;
FIG. 2 is a view showing the construction of a building management system according to an exemplary embodiment of the present invention; and
FIG. 3 is a view showing the structure of a remote integrated management server in FIG. 2.

The present invention will now be described with reference to the accompanying drawings.

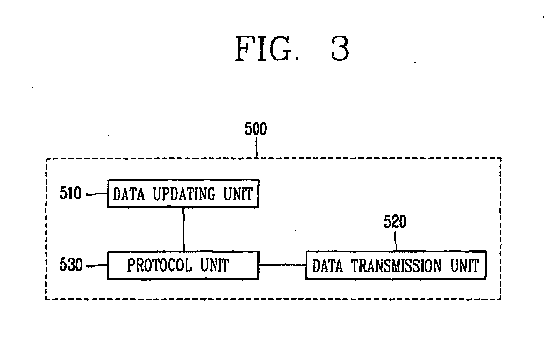

FIG. 2 is a view showing the construction of a building management system according to an exemplary embodiment of the present invention, and FIG. 3 is a view showing the structure of a remote integrated management server in FIG. 2.

As shown in FIGS. 2 and 3, the building management system according to an exemplary embodiment of the present invention includes: a central control system that centrally controls at least one sub-system of a building such as power management and illumination equipment; a multi-air-conditioner system 20; a BACnet gateway 300 that connects the central control system 100 with the multi-air-conditioner system 200 to allow the central control system 100 to centrally control the multi-air-conditioner system 200; and a remote integrated management server 400 that controls the multi-air-conditioner system 200 by interworking with the BACnet system 300.

An interworking module 500 may be provided between the BACnet gateway 300 and the remote integrated management server 400 to allow the BACnet gateway 300 and the remote integrated management server 400 to interwork with each other.

The interworking module 500 includes a data updating unit 510 that periodically updates data; a data transmission unit 520 that transits the updated data to the remote integrated management server 400; and a protocol unit 530 that connects the data updating unit 510 and the data transmission unit 520.

The data updating unit 510 is connected with the central control system 100 and the BACnet gateway 300. The data transmission unit 520 is connected with the remote integrated management server 400. The protocol unit 530 is provided between the data updating unit 510 and the data transmission unit 520 so that it can generate transmitted data as a new tag and transmits the generated tag to the data updating unit 510.

The protocol unit 530 uses an XML protocol to facilitate a variable extension. The XML protocol can allows generation every information regarding an indoor and ventilation and transmission of the same, having the best expandibility among any other Web protocols without being restricted to diversity of information. In addition, the protocol unit 530 interworks such that small and detailed information, which may not be managed by the larger central control system 100, can be managed through a special (technical or professional) service, so that the convenience of users who use the multi-air-conditioner system 200 can be improved.

With such a construction, the building management system according to the exemplary embodiment of the present invention is operated as follows.

Namely, the interworking module 500 is provided between the BACnet gateway 300 and the remote integrated management server 400 serving as a connection passage between the central control system 100 and the multi-air-conditioner system 200 to allow the BACnet gateway 300 and the remote integrated management server 400 to interwork with each other, and the interworking module 500 periodically receives data regarding the indoor units and ventilation from the multi-air-conditioner system 200.

The interworking module 500 reads the data regarding the indoor units and ventilation, stores XML tags for including each information and the respective information in a buffer, is connected with the remote integrated management server 400, and periodically transmits the data to the remote integrated management server 400.

In this manner, upon receiving the detailed data related to the indoor units and ventilation through the interworking module 500, the remote integrated management server 400 can manage the small, detailed information, which was not possible in the related art.

As so far described, the building management system and method according to the present invention has such an advantage that because detailed information can be managed through the remote integrated management server, which is not possible in the existing building management system, the user convenience can be improved.

As the present invention may be embodied in several forms without departing from the characteristics thereof, it should also be understood that the above-described embodiments are not limited by any of the details of the foregoing description, unless otherwise specified, but rather should be construed broadly within its scope as defined in the appended claims, and therefore all changes and modifications that fall within the metes and bounds of the claims, or equivalents of such metes and bounds are therefore intended to be embraced by the appended claims.

## Claims

1. A building management system comprising:
a central control system that centrally controls at least one sub-system of a building;
a multi-air-conditioner system;
a BACnet gateway that connects the central control system with the multi-air-conditioner system to allow the central control system to centrally control the multi-air-conditioner system; and
a remote integrated management server that controls the multi-air-conditioner system by interworking with the BACnet gateway.

2. The system of claim 1, further comprising:
an interworking module connected between the BACnet gateway and the remote integrated management server that allows the BACnet gateway and the remote integrated management server to interwork with each other.

3. The system of claim 2, wherein the interworking module comprises:
a data updating unit that periodically updates data;
a data transmission unit that transmits the updated data to the remote integrated management server; and
a protocol unit that connects the data updating unit and the data transmission unit.

4. The system of claim 3, wherein the protocol unit uses an XML (eXtensible Markup Language) protocol to facilitate a variable extension.

5. A building management system according to claim 2,
wherein the interworking module periodically receives first information data from the multi-air-conditioner system, stores the first information data, and transmits the first information data to the remote integrated management server.

6. The system of claim 5, wherein the first information data comprises information data related to at least one of an indoor unit and a ventilation of the multi-air-conditioner system.

7. The system of claim 5 or 6, wherein the interworking module comprises:
a data updating unit that periodically updates data;
a data transmission unit that transmits the updated data to the remote integrated management server; and
a protocol unit that connect the data updating unit and the data transmission unit.

8. The system of claim 7, wherein the protocol unit uses an XML (eXtensible Markup Language) protocol to facilitate a variable extension.

9. A building management method comprising the steps of:
connecting by a BACnet gateway a central control system with a multi-air-conditioner system to allow the central control system to centrally control the multi-air-conditioner system, wherein the central control system centrally controls at least one subsystem of a building; and
controlling the multi-air conditioner system with a remote integrated management server, wherein the remote integrated management server interworks with said BACnet gateway.

10. The method of claim 9 comprising:
periodically receiving and updating first information data of the multi-air-conditioner system;
generating a tag from the received first information data and storing the generated tag; and
transmitting the generated tag to the remote integrated management server.

11. The method of claim 10, wherein the first information data comprises information data related to at least one of an indoor unit and a ventilation of the multi-air-conditioner system.

12. The method of claim 10 or 11, wherein the tag is generated by using an XML protocol.

## Patentansprüche

1. Verwaltungssystem für Gebäude, mit:
einem zentralen Steuersystem, das mindestens ein Teilsystem eines Gebäudes zentral steuert;
einem Multiklimasystem;
einem BACnet-Gateway, das das zentrale Steuersystem mit dem Multiklimasystem verbindet, damit das zentrale Steuersystem das Multiklimasystem zentral steuern kann; und
einem integrierten Fernverwaltungsserver, der das Multiklimasystem durch Zusammenarbeit mit dem BACnet-Gateway steuert.

2. System nach Anspruch 1, ferner mit:
einem zwischen dem BACnet-Gateway und dem integrierten Fernverwaltungsserver verbundenen Zusammenarbeitsmodul,
das dem BACnet-Gateway und dem integrierten Fernverwaltungsserver ermöglicht, miteinander zusammenzuarbeiten.

3. System nach Anspruch 2, wobei das Zusammenarbeitsmodul aufweist:
eine Datenaktualisierungseinheit, die Daten periodisch aktualisiert;
eine Datensendeeinheit, die die aktualisierten Daten zum integrierten Fernverwaltungsserver sendet; und
eine Protokolleinheit, die die Datenaktualisierungseinheit und die Datensendeeinheit verbindet.

4. System nach Anspruch 3, wobei die Protokolleinheit ein XML- (eXtensible Markup Language) Protokoll verwendet, um eine variable Erweiterung zu erleichtern.

5. System nach Anspruch 2, wobei das Zusammenarbeitsmodul erste Informationsdaten vom Multiklimasystem periodisch empfängt, die ersten Informationsdaten speichert und die ersten Informationsdaten zum integrierten Fernverwaltungsserver sendet.

6. System nach Anspruch 5, wobei die ersten Informationsdaten Informationsdaten aufweisen, die eine Innenraumeinheit und/oder eine Lüftung des Multiklimasystems betreffen.

7. System nach Anspruch 5 oder 6, wobei das Zusammenarbeitsmodul aufweist:
eine Datenaktualisierungseinheit, die Daten periodisch aktualisiert;
eine Datensendeeinheit, die die aktualisierten Daten zum integrierten Fernverwaltungsserver sendet; und
eine Protokolleinheit, die die Datenaktualisierungseinheit und die Datensendeeinheit verbindet.

8. System nach Anspruch 7, wobei die Protokolleinheit ein XML- (eXtensible Markup Language) Protokoll verwendet, um eine variable Erweiterung zu erleichtern.

9. Verwaltungsverfahren für Gebäude, mit den Schritten:
durch ein BACnet-Gateway erfolgendes Verbinden eines zentralen Steuersystems mit einem Multiklimasystem, damit das zentrale Steuersystem das Multiklimasystem zentral steuern kann, wobei das zentrale Steuersystem mindestens ein Teilsystem eines Gebäudes zentral steuert; und
Steuern des Multiklimasystems mit einem integrierten Fernverwaltungsserver, wobei der integrierte Fernverwaltungsserver mit dem BACnet-Gateway zusammenarbeitet.

10. Verfahren nach Anspruch 9, das aufweist:
periodisches Empfangen und Aktualisieren erster Informationsdaten des Multiklimasystems;
Erzeugen eines Auszeichners bzw. Tags anhand der empfangenen ersten Informationsdaten und Speichern des erzeugten Tags; und
Senden des erzeugten Tags zum integrierten Fernverwaltungsserver.

11. Verfahren nach Anspruch 10, wobei die ersten Informationsdaten Informationsdaten aufweisen, die eine Innenraumeinheit und/oder eine Lüftung des Multiklimasystems betreffen.

12. Verfahren nach Anspruch 10 oder 11, wobei das Tag mit Hilfe eines XML-Protokolls erzeugt wird.

## Revendications

1. Système de gestion de construction, comprenant :
un système de commande central lequel commande de manière centralisée au moins un sous-système d'une construction ;
un système de climatisation multiple ;
une passerelle BACnet laquelle connecte le système de commande central au système de climatisation multiple en vue de permettre au système de commande central de commander de manière centralisée le système de climatisation multiple ; et
un serveur de gestion intégrée distant qui commande le système de climatisation multiple au moyen d'un interfonctionnement avec la passerelle BACnet.

2. Système selon la revendication 1, comprenant en outre :
un module d'interfonctionnement connecté entre la passerelle BACnet et le serveur de gestion intégrée distant, lequel module permet un interfonctionnement mutuel de la passerelle BACnet et du serveur de gestion intégrée distant.

3. Système selon la revendication 2, dans lequel le module d'interfonctionnement comporte :
une unité de mise à jour de données, laquelle met à jour périodiquement des données ;
une unité de transmission de données qui transmet les données mises à jour au serveur de gestion intégrée distant ; et
une unité de protocole qui connecte l'unité de mise à jour de données et l'unité de transmission de données.

4. Système selon la revendication 3, dans lequel l'unité de protocole utilise un protocole de langage de balisage extensible (XML) afin de faciliter une extension variable.

5. Système de gestion de construction selon la revendication 2,
dans lequel le module d'interfonctionnement reçoit périodiquement des premières données d'information en provenance du système de climatisation multiple, stocke les premières données d'information, et transmet les premières données d'information au serveur de gestion intégrée distant.

6. Système selon la revendication 5, dans lequel les premières données d'information comportent des données d'information connexes à au moins l'un des éléments parmi une unité interne et une ventilation du système de climatisation multiple.

7. Système selon la revendication 5 ou 6, dans lequel le module d'interfonctionnement comprend :
une unité de mise à jour de données qui met à jour périodiquement des données ;
une unité de transmission de données qui transmet les données mises à jour au serveur de gestion intégrée distant ; et
une unité de protocole qui connecte l'unité de mise à jour de données et l'unité de transmission de données.

8. Système selon la revendication 7, dans lequel l'unité de protocole utilise un protocole de langage de balisage extensible (XML) afin de faciliter une extension variable.

9. Procédé de gestion de construction comprenant les étapes ci-dessous consistant à :
connecter, par le biais d'une passerelle BACnet, un système de commande central à un système de climatisation multiple en vue de permettre au système de commande central de commander de manière centralisée le système de climatisation multiple, dans lequel le système de commande central commande de manière centralisée au moins un sous-système d'une construction ;
commander le système de climatisation multiple avec un serveur de gestion intégrée distant, dans lequel le serveur de gestion intégrée distant interagit avec ladite passerelle BACnet.

10. Procédé selon la revendication 9, comprenant les étapes ci-dessous consistant à :
recevoir et mettre à jour périodiquement des premières données d'information du système de climatisation multiple ;
générer une balise à partir des premières données d'information reçues et stocker la balise générée ; et
transmettre la balise générée au serveur de gestion intégrée distant.

11. Procédé selon la revendication 10, dans lequel les premières données d'information comportent des données d'information connexes à au moins l'un des éléments parmi une unité interne et une ventilation du système de climatisation multiple.

12. Procédé selon la revendication 10 ou 11, dans lequel la balise est générée en utilisant un protocole XML.
